# EUROPÄISCHE PATENTANMELDUNG

(11) **EP 3 012 351 A1**
(43) Veröffentlichungstag der Anmeldung: **27.04.2016**
(21) Anmeldenummer: 14003600.5
(22) Anmeldetag: 22.10.2014
(51) Int. Cl.: C25B 1/00

(54) **Verfahren zur effizienten Nutzung von polychromatischem Licht bei der photokatalytischen Wasserspaltung**

(71) Anmelder: Universität Stuttgart, 70174 Stuttgart (DE)
(72) Erfinder: Ziegenbalg, Dirk, 70565 Stuttgart (DE); Tastan, Ümit, 71159 Mötzingen (DE)
(74) Vertreter: Müller-Boré & Partner Patentanwälte PartG mbB

(57) **Zusammenfassung**

Die Erfindung bezieht sich auf ein Verfahren zur Nutzung von polychromatischem Licht, das eine Wellenlänge im Bereich von 200 nm bis 1000 nm aufweist, wobei das polychromatische Licht auf eine ebene Photoanode (5) in einem Reaktorteil (1) trifft, worin Sauerstoff durch Wasserphotolyse erzeugt wird, und das von der Photoanode (5) nicht absorbierte Licht auf einen weiteren Reaktorteil umgelenkt wird, wobei der weitere Reaktorteil
a) Reaktorteil (4) für photochemische Reaktionen ist, wobei Reaktorteil (1) über eine ionendurchlässige Membran (3) mit einem Reaktorteil (2) verbunden ist, in dem an der zur Photoanode (5) zugehörigen Kathode (6) Wasserstoff erzeugt wird; oder
b) Reaktorteil (11) für eine photokatalytische Wasserstofferzeugung ist, der mit Photokathode (9) über eine ionendurchlässige Membran (3) mit Reaktorteil (1) verbunden ist; oder
c) eine Photovoltaikzelle (10) ist, wobei Reaktorteil (1) über eine ionendurchlässige Membran (3) mit Reaktorteil (2) verbunden ist, in dem an der zur Photoanode (5) zugehörigen Kathode (6) Wasserstoff erzeugt wird,

dadurch gekennzeichnet, dass die Photoanode (5) einen Winkel α im Bereich von mehr als 0° und weniger als 90° zum einfallenden polychromatischen Licht aufweist und der weitere Reaktorteil (4, 10, 11) so angeordnet ist, dass er das von der Photoanode (5) reflektierte Licht aufnimmt.

## Beschreibung

Die vorliegende Erfindung betrifft das Gebiet der Nutzung von Sonnenlicht zur photokatalytischen Wasserspaltung, kombiniert mit photochemischer Umsetzung organischer Substanzen und/oder photovoltaischer Stromerzeugung. Insbesondere betrifft die vorliegende Erfindung ein Verfahren zur effizienteren Nutzung von polychromatischem Licht, wie etwa Sonnenlicht.

Als photokatalytische Wasserspaltung wird der Vorgang bezeichnet, bei dem Licht, z.B. das polychromatische Sonnenlicht, eingesetzt wird, um Wasser in seine Bestandteile Wasserstoff und Sauerstoff zu zerlegen. Dabei wird, bedingt durch das Material des Katalysators, an der Photoanode nur ein Teil des auffallenden Lichts genutzt. Der restliche Teil der Photonen wird reflektiert und geht verloren.

DE102011050332A1 beschreibt ein Energiewandler-Konzentrator-System zur direkten Umwandlung von Sonnenenergie in elektrische und/oder thermische Energie. Dabei wird eine Konzentratoroptik eingesetzt, wodurch ein erhöhter Gesamtwirkungsgrad erzielt wird.

DE102004012303B3 beschreibt eine photochemische Reaktionszelle in der drei hintereinander geschaltete sehr dünne Photoelektroden aus Materialien mit unterschiedlichem Bandabstand angeordnet sind, sodass einfallendes polychromatisches Licht absorbiert wird, nicht absorbiertes Licht die Elektroden durchdringt und schließlich in der letzten Elektrode vollständig absorbiert wird. Die Elektroden stehen einander gegenüber, damit je Kammer nur eine Gassorte erzeugt wird.

Aufgabe der vorliegenden Erfindung ist die Bereitstellung eines Verfahrens und der zugehörigen Vorrichtung(en) zur Erzielung einer effizienteren Ausnutzung von polychromatischem Licht, wie Sonnenlicht, bei der Verwendung der photokatalytischen Wasserspaltung.

Die Aufgabe wird durch ein photokatalytisches Verfahren gelöst, bei dem die von der Photoanode nicht absorbierte reflektierte Strahlung in einem weiteren Energiewandlungsvorgang genutzt wird. Insbesondere betrifft die Erfindung ein Verfahren zur Energienutzung von polychromatischem Licht, das eine Wellenlänge im Bereich von 200 nm bis 1000 nm aufweist, wobei das polychromatische Licht auf eine Photoanode 5 in einem Reaktorteil 1 trifft, worin Sauerstoff durch Wasserphotolyse erzeugt wird, während das von der Photoanode 5 nicht absorbierte Licht auf einen weiteren Reaktorteil umgelenkt wird, wobei der weitere Reaktorteil
a) Reaktorteil 4 für photochemische Reaktionen ist, wobei Reaktorteil 1 über eine ionendurchlässige Membran 3 mit einem Reaktorteil 2 verbunden ist, in dem an der zur Photoanode 5 zugehörigen Kathode 6 Wasserstoff erzeugt wird; oder
b) Reaktorteil 11 für eine photokatalytische Wasserstofferzeugung ist, der mit Photokathode 9 über eine ionendurchlässige Membran 3 mit Reaktorteil 1 verbunden ist; oder
c) eine Photovoltaikzelle 10 ist, wobei Reaktorteil 1 über eine ionendurchlässige Membran 3 mit Reaktorteil 2 verbunden ist, in dem an der zur Photoanode 5 zugehörigen Kathode 6 Wasserstoff erzeugt wird,
wobei die Photoanode 5 einen Winkel α im Bereich von mehr als 0° und weniger als 90° zum einfallenden polychromatischen Licht aufweist und der weitere Reaktorteil 4, 10, 11 so angeordnet ist, dass er das von der Photoanode 5 reflektierte Licht aufnimmt. Die Photoanode stellt vorzugsweise eine ebene Fläche dar, kann aber ebenso eine gekrümmte oder anderweitig gestaltete Form annehmen, wobei die das reflektierte Licht aufnehmenden Flächen so angepasst werden können, dass das Licht optimal genutzt wird.

Bei der Photoelektrolyse von Wasser laufen mehrere Vorgänge zwischen der Photoanode und der Photoanode-Elektrolyt-Grenzfläche ab. Diese Schritte beinhalten:
- Die Absorption von Licht mit Energie gleich oder größer der Bandlücke des Katalysators. Durch die Absorption wird eine Ladungstrennung induziert, wobei die Elektronen aus dem Valenzband in das Leitungsband angehoben werden und damit Lücken oder Löcher im Valenzband entstehen. Ladungstrennung und Transfer finden zur selben Zeit statt.

   2 hν → 2e⁻ + 2 h⁺ (1)
- Zudem wird das Wasser oxidiert, während H⁺-Ionen von der Photoanode zur Kathode durch den Elektrolyt transportiert werden.

   2 h⁺ + H₂O_{aq} → ½ O₂ + 2 H⁺ (2)
- Die durch den äußeren Stromkreis von der Anode zur Kathode transportierten Elektronen reduzieren an der Kathode H⁺-Ionen.

   2 H⁺ + 2e⁻ → H₂ (3)
- Es läuft also folgende Bruttoreaktion ab:

   H₂O + 2 hν → ½ O₂ + H₂ (4)

Reaktion (4) läuft erst dann ab, wenn die absorbierten Photonen gleich viel oder mehr Energie als die Bandlücke der verwendeten Photoanode besitzen. Titandioxid in der Rutil-Modifikation besitzt eine Bandlücke von 3,0 eV und kann daher Licht mit einer Wellenlänge von bis ca. 420 nm absorbieren. Dies entspricht ca. 4 % des gesamten Photonenstroms der Sonnenstrahlung. In der Theorie wird für die Wasserspaltung eine Spannung von 1,23 V benötigt. Ein Katalysator mit einer Bandlücke von 1,23 eV kann das Licht mit einer Wellenlänge bis ca. 1000 nm absorbieren, was somit ca. 50 % der gesamten Sonnenstrahlung entspricht. Dies stellt die höchst mögliche Effizienz für die Wasserspaltung bei Verwendung des Sonnenlichts dar. Aufgrund der in der Praxis auftretenden Energieverluste, muss der Katalysator mindestens eine Bandlücke von 2,0 eV besitzen, woraus sich eine Wellenlänge von ca. 620 nm ergibt. Somit kann in der Praxis eine Effizienz von max. 35 % erreicht werden.

Bei der photokatalytischen Wasserspaltung werden meistens Halbleiteroxide als Photoanode und Platin als Gegenelektrode verwendet. Am häufigsten finden als Photoanode TiO₂, SrTiO₃, WO₃, ZnO, Fe₂O₃, FeTiO₃, BaTiO₃ und CeO₂ Anwendung. Voraussetzung für die Absorption von Licht ist, dass die Energie der eingestrahlten Photonen gleich oder größer der Energie der Bandlücke des verwendeten Katalysators ist. Allerdings ist die Bandlückenenergie der aufgeführten Katalysatoren relativ groß, so dass Photonen mit einer großen Energie/kurzen Wellenlängen benötigt werden. Die Bandlückenenergien dieser Katalysatoren liegen zwischen 2,7 eV bis 3,7 eV und können daher nur Photonen mit einer Wellenlänge z.B. für TiO₂ unter ca. 420 nm absorbieren. Wird die Photoelektrode mit polychromatischem Licht, wie beispielsweise Sonnenlicht, bestrahlt, so kann nur ein geringer Anteil der eingestrahlten Photonen genutzt werden. Der restliche Teil der Photonen wird reflektiert und geht verloren.

Das erfindungsgemäße Verfahren setzt nun eine zum einfallenden Licht winklig (Winkel α) eingestellte Photoanode ein, an der das von der Photoanode nicht absorbierte Licht in einem definierten Winkel zur Richtung des einfallenden Lichts zur weiteren Nutzung reflektiert wird. Die weitere Nutzung kann durch einen Reaktor zur Ausführung photochemischer Umsetzungen, durch einen weiteren photokatalytischen Reaktor, der durch eine Photokathode in der Lage ist, das reflektierte Licht zu nutzen, oder eine Photovoltaikzelle erfolgen. Durch diese Kombination(en) entsteht ein Reaktorkonzept, d.h. eine Zusammenschaltung mehrerer lichtnutzender Reaktoren, wodurch einfallendes polychromatisches Licht, z.B. Sonnenlicht, mit einem gesteigerten Wirkungsgrad genutzt wird.

Das erfindungsgemäße Reaktorkonzept ermöglicht die Verwendung eines breiteren Spektrums des an der Katalysatoroberfläche reflektierten Lichtes. Die Elektrode wird dazu von einer Seite mit polychromatischem Licht bestrahlt (200 nm - 1000 nm). Das von der Photoanode (5) nicht absorbierte Licht weist insofern eine Wellenlänge im Bereich von (200 nm + λₓ) bis 1000 nm auf (mit λₓ in nm). Beispielsweise werden die Photonen durch die TiO₂-Photoanode mit einer Wellenlänge unter 420 nm (d.h. λₓ = 220 nm absorbiert), so dass das von der Photoanode (5) nicht absorbierte Licht im Bereich von > 420 nm bis 1000 nm liegt. Der Wert λₓ kann für andere Materialien der Photoelektrode selbstverständlich von 220 nm verschieden sein. Durch die Anordnung der Photoanode in einem definierten Winkel α zum Strahlengang werden die nicht absorbierten Photonen (> 420 nm bis 1000 nm im Falle von TiO₂) gezielt auf den Ort des weiteren Reaktors reflektiert, an dem eine Nutzung des nicht absorbierten Lichts stattfinden soll. Das von der Katalysator-Oberfläche reflektierte Licht kann zum einen für photochemische Reaktionen, die durch sichtbares Licht initiiert werden, verwendet werden. Zum anderen kann dieses Konzept eines Tandemreaktors auch auf die vollständige photokatalytische Wasserspaltung erweitert werden, indem eine Photokathode im zweiten Reaktor eingesetzt wird. Im Strahlengang des reflektierten Lichtes kann daher eine Photokathode oder eine Photovoltaik-Zelle angeordnet werden, welche das reflektierte Licht absorbieren können. Durch Verbindung der Elektroden mittels eines äußeren Stromkreises kann dieser Ansatz das sogenannte "Z-Schema" der Wasserspaltung imitieren. Auf diese Weise kann ein deutlich größerer Anteil des polychromatischen Sonnenspektrums für die Wasserspaltung verwendet werden und somit die Gesamteffizienz des Prozesses erhöht werden. Dies bedeutet ebenfalls, dass ein größerer Anteil der Energie des solaren Spektrums in chemischer Energie gespeichert werden kann, wodurch entsprechende Anlagen zur photokatalytischen Wasserspaltung kleiner dimensioniert werden können bzw. leistungsfähiger wären.

Das Reaktorkonzept ist auch durchführbar, wenn der Winkel α des auf die Photoanode einfallenden Lichts 90° ist, d.h. dass das von der Photoanode reflektierte, nicht absorbierte Licht eigentlich wieder zurückgeworfen würde. In diesem Fall wird vor der vorderen Reaktorscheibe 7 winklig, z.B. mit einem Winkel α von 45°, ein dichroitischer oder ein dielektrischer Spiegel angebracht, welcher beispielsweise den Bereich von 200 bis 420 nm (im Fall von TiO₂ auf der Photoanode, d.h. λₓ = 220 nm) in gerader Richtung auf die Photoanode auftreffen lässt, aber den langwelligeren Anteil im Winkel α von 45° auf den weiteren Reaktor z.B. für eine photochemische Umsetzung oder zur photovoltaischen Stromerzeugung reflektiert.

Figur 1 zeigt eine schematische Darstellung des Reaktorkonzepts 1, wobei das in Reaktorteil 1 von der Photoanode nicht absorbierte Licht auf Reaktorteil 4 reflektiert wird und für eine photochemische Umsetzung eines organischen Stoffs, z.B. unter Nutzung des in Reaktorteil 1 generierten Sauerstoffs, genutzt wird.

Figur 2 zeigt eine schematische Darstellung des Reaktorkonzepts 2, wobei das in Reaktorteil 1 von der Photoanode nicht absorbierte reflektierte Licht auf die photokatalytisch präparierte Kathode der Wasser-Photolyse-Zelle (Reaktorteile 1 und 11) trifft.

Figur 3 zeigt eine schematische Darstellung des Reaktorkonzepts 3, wobei das in Reaktorteil (1) von der Photoanode nicht absorbierte reflektierte Licht auf eine Photovoltaik-Zelle trifft.

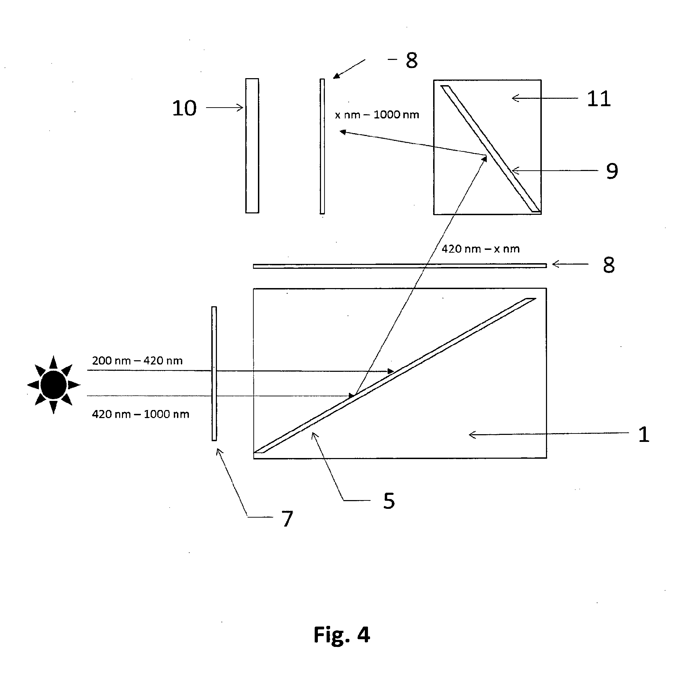

Figur 4 zeigt eine weitere Ausführungsform der Erfindung. Wird in diesem Fall die Elektrode zum einfallenden Licht in einem Winkel α kleiner als 45° ausgerichtet, wird das Licht nicht mehr um 90° zum einfallenden Lichtstrahl reflektiert, sondern in einem größeren Winkel. Auf diese Weise ist es möglich, mehr als zwei Reaktorteile zu bestrahlen. In unserem Fall wäre es so bspw. möglich, zuerst eine Photoanode, anschließend eine Photokathode und danach eine Photovoltaikzelle zu bestrahlen. Die Photovoltaikzelle kann dann mit der Anode und der Kathode über einen externen Stromkreis gekoppelt werden, sodass die zusätzliche Energie in das System eingespeist werden kann. Die Anzahl der nutzbaren Reaktorteile ist dann zum einen vom Winkel der Photoelektrode zum einfallenden Lichtstrahl und zum anderen von der optischen Auslegung der Elektrode abhängig. Es könnten so auch mehr als 3 Teile eingesetzt werden.

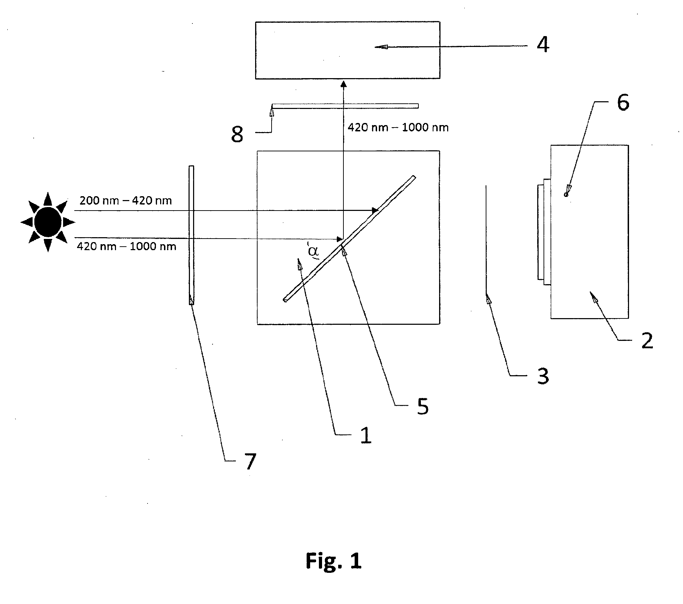

Das in Figur 1 schematisch dargestellte Reaktorkonzept 1 ermöglicht durch Bestrahlung mit polychromatischem Licht gleichzeitig sowohl die photokatalytische Wasserspaltung als auch die Initiierung von zusätzlichen photochemischen Reaktionen.

Der Reaktor ist modular aufgebaut und besteht aus drei Teilreaktoren 1, 2, 4. Jeder Reaktorteil besitzt mindestens zwei Öffnungen für die Bestrahlung und den Austausch von Reaktanten oder Elektrolyten. Zusätzlich gibt es in Teilreaktoren 1 und 2 eine Öffnung, um den entstehenden Sauerstoff (Reaktorteil 1) bzw. Wasserstoff (Reaktorteil 2) aus dem Reaktor zu entfernen. In den Reaktorteilen 1 und 2 befinden sich wässrige Elektrolyte. Der Reaktorteil 1 und der Reaktorteil 2 sind mit Hilfe einer ionendurchlässigen, semipermeablen Membran 3, welche z.B. Kationen-spezifisch ist, voneinander getrennt.

Der Reaktorteil 1 wird mit polychromatischem Licht bestrahlt. Demgemäß trifft Licht mit einer Wellenlänge zwischen 200 nm und 1000 nm auf die Photoanode 5. Die Photoanode 5 besteht aus einem photokatalytisch aktiven Material und wird beispielsweise in einem Winkel α von 45° zum Strahlengang in dem Reaktorteil 1 angeordnet. Dabei wird das Licht unterhalb einer bestimmten Wellenlänge, beispielsweise 420 nm bei Verwendung von TiO₂, durch die Photoanode absorbiert. Durch die Absorption werden die Elektronen vom Valenzband in das Leitungsband angeregt. Dabei entstehen Lücken oder Löcher im Valenzband und führen zur Oxidation von Wasser, vgl. vorstehend genannte Gleichungen (1) bis (4). H⁺-Ionen werden von der Photoanode zur Kathode durch den Elektrolyt und die kationendurchlässige semipermeable Membran 3 transportiert. Der Transport von Elektronen von der Anode zur Kathode 6 erfolgt über einen externen Stromkreis. Durch die Reduktion von H⁺-Ionen an der Kathode entsteht Wasserstoff. Für die Gesamtreaktion wird das Licht unterhalb einer definierten Grenzwellenlänge verwendet. Licht mit einer Wellenlänge oberhalb der Grenzwellenlänge wird daher nicht durch die Photoanode absorbiert, sondern in Richtung Reaktorteil 4 reflektiert. Dieser Teil des Lichtes wird für die Initiierung von weiteren photochemischen Reaktionen verwendet. Als Beispiel solcher Reaktionen kann die Synthese von Ascaridol, ausgehend von α-Terpinen und Sauerstoff, genannt werden.

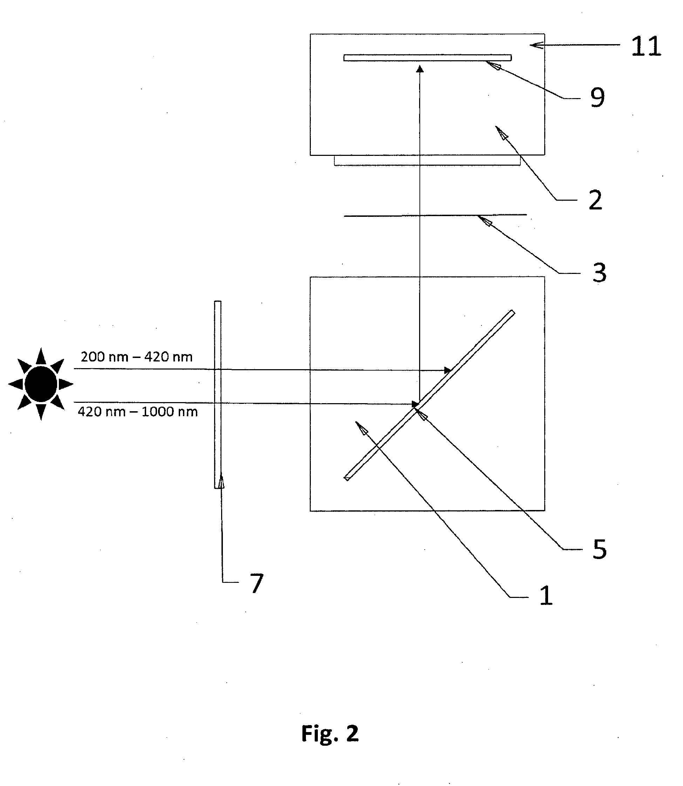

Das Reaktorkonzept 2 ist in Figur 2 schematisch dargestellt. In Reaktorteil 1 und 11 befinden sich wässrige Elektrolyten. Der Reaktorteil 1 und Reaktorteil 11 sind mit Hilfe einer semipermeablen Membran 3, welche nur für Kationen durchlässig ist, z.B. Nafion, voneinander getrennt.

Der Reaktorteil 1 wird mit polychromatischem Licht bestrahlt. Dabei wird das Wasser durch Licht mit einer Energie größer der Bandlücke der Photoanode 5 oxidiert und es entsteht Sauerstoff (beispielsweise bei einer Wellenlänge unterhalb 420 nm bei Verwendung von TiO₂). Licht mit einer Energie kleiner der Bandlücke der Photoanode wird an dieser in Richtung Photokathode 9 reflektiert. Beim Auftreffen des reflektierten Lichts auf die Photokathode wird an dieser die photokatalytische Wasserreduktion initiiert. Mit diesem Aufbau kann das Tandemreaktorkonzept auf die photokatalytische Wasserspaltung an zwei unterschiedlichen Photokatalysatoren übertragen werden, wobei die benötige Energie zur Initiierung der Reaktion durch zwei Photonen polychromatischen Lichts bereitgestellt wird.

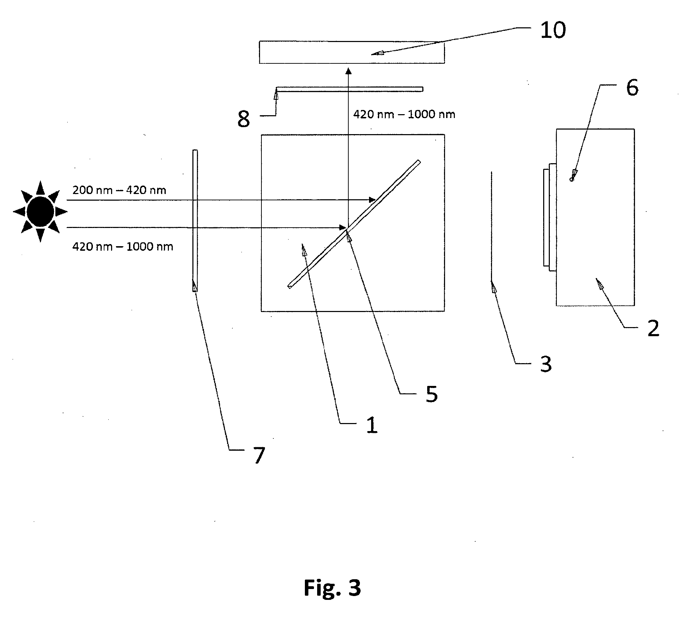

Das Reaktorkonzept 3 ist in Figur 3 schematisch dargestellt. Im Vergleich zum Reaktorkonzept 2 wird beim Reaktorkonzept 3 die Photokathode gegen eine Photovoltaik-Zelle 10 ausgetauscht. Die Photovoltaik-Zelle ist über einen externen Stromkreis an die Photoanode 5 und die Gegenelektrode 6 angeschlossen. Die Photovoltaik-Zelle ermöglicht es, mit Hilfe des reflektierten Lichts eine zusätzliche elektrische Spannung zu erzeugen. Die auf diese Art und Weise erzeugte elektrische Spannung wird direkt für die photoelektrochemische Wasserspaltung verwendet, ohne dass eine externe Spannung angelegt werden muss.

Die Photoanode des Reaktors 1 kann auf einen Winkel α kleinerer als 45° zum einfallenden Licht eingestellt werden. Hierdurch wird der Einsatz von mehreren weiteren Reaktoren ermöglicht, wie in Figur 4 verdeutlicht. Je kleiner der Winkel zwischen der Achse des einfallenden Lichts und der Photoanode ist, umso größer gestaltet sich der für weitere Reaktoren nutzbare Raum, sodass auch mehr als 3 hintereinander betriebene Reaktoren das einfallende Licht nutzen können. Des Weiteren sind die Oberflächengeometrie der Photoanode und ebenso der anderen reflektierenden Elektroden nicht auf eine ebene Fläche begrenzt. Es können z.B. auch gekrümmte und damit fokussierende oder streuende Oberflächen eingesetzt werden, die weitere Freiheitsgrade bei der Lenkung des reflektierten Lichts und damit bei der Anordnung mehrerer Reaktoren in der Umgebung der Photoanode 1 zulassen.

Der Begriff "energetisch genutzt" bedeutet im Zusammenhang mit der vorliegenden Erfindung, dass das an der Photoanode nicht absorbierte, reflektierte Licht zur Umwandlung in chemische (Umsetzung von chemischen Verbindungen z.B. mit dem photoanodisch generierten Sauerstoff) oder elektrische (Photovoltaik-Zelle) Energie genutzt wird.

Aufgrund der Möglichkeit, verschiedene Bereiche des elektromagnetischen Spektrums nutzen zu können, ermöglichen die vorstehenden erfindungsgemäßen Reaktorkonzepte eine deutlich effizientere energetische bzw. chemische Nutzung polychromatischer Strahlung, wie bspw. solarer Strahlung.

### Beispiele

Mit dem Reaktorkonzept 1 konnte mit einer einzelnen Lichtquelle zunächst molekularer Sauerstoff aus Wasser freigesetzt werden. Die Photoanode besteht z.B. aus kalziniertem Titanblech oder Titanblech, das mit Titanisopropoxid mehrfach behandelt und anschließend kalziniert wurde. Die Beschichtung kann auch nach dem SOLECTRO^{(R)}-Verfahren erfolgen. An der Kathode 6 entsteht gleichzeitig Wasserstoff entsprechend der stöchiometrischen Verhältnisse. Als Membran zwischen Photoanodenraum und Kathodenraum diente eine ionendurchlässige Membran aus Nafion der Firma Dupont (z.B. Nafion 424). Der Sauerstoff wurde direkt in den Reaktorteil (3) geleitet, in welchem α-Terpinen in einer photosensibilisierten Reaktion zu Ascaridol (Umsatz bis zu 99%), etwas Cymol und anderen Nebenprodukten umgesetzt werden konnte.

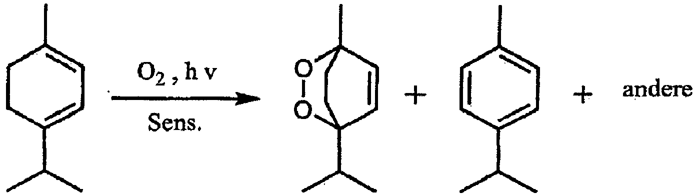

Als Sensibilisator wurde Bengalrosa und als Lösungsmittel Methanol verwendet. Versuche unter Verzicht von Sauerstoff (durch Austausch gegen Stickstoff) und/oder Sensibilisator schlugen fehl, d.h. dass keine Reaktanten wie Licht, Sauerstoff und Sensibilisator fehlen dürfen. Eine Übertragung auf industriell relevante Reaktionen, wie beispielsweise der photosensibilisierten Synthese von Artemisinin, ist möglich.

Der für die photokatalytische Wasserspaltung gemessene Photostrom gemäß Reaktorkonzept 3 konnte im Vergleich zum Reaktor ohne Solarzelle durch Einsatz einer handelsüblichen Solarzelle um den Faktor 3 gesteigert werden. Durch den Einsatz effizienterer und besser angepasster Photovoltaikzellen kann eine weitere Steigerung der photonischen Gesamteffizienz erzielt werden.

### Bezugszeichenliste

- 1: Reaktorteil für die photokatalytische Sauerstoff-Erzeugung
- 2: Reaktorteil für die Wasserstoff-Erzeugung
- 3: für Kationen durchlässige semipermeable Membran
- 4: Reaktorteil für die photochemischen Reaktionen
- 5: Photoanode für die photokatalytische Sauerstoff-Erzeugung
- 6: Platin-Gegenelektrode für die Wasserstoff-Erzeugung
- 7: Vordere Reaktorscheibe
- 8: Seitliche Reaktorscheibe
- 9: Photokathode für die photokatalytische Wasserstoff-Erzeugung
- 10: Reaktorteil = Photovoltaik-Zelle
- 11: Reaktorteil für die photokatalytische Wasserstoff-Erzeugung

## Patentansprüche

1. Verfahren zur Energienutzung von polychromatischem Licht, das eine Wellenlänge im Bereich von 200 nm bis 1000 nm aufweist, wobei das polychromatische Licht auf eine Photoanode (5) in einem Reaktorteil (1) trifft, worin Sauerstoff durch Wasserphotolyse erzeugt wird, und das von der Photoanode (5) nicht absorbierte Licht auf einen weiteren Reaktorteil umgelenkt wird, wobei der weitere Reaktorteil
a) Reaktorteil (4) für photochemische Reaktionen ist, wobei Reaktorteil (1) über eine ionendurchlässige Membran (3) mit einem Reaktorteil (2) verbunden ist, in dem an der zur Photoanode (5) zugehörigen Kathode (6) Wasserstoff erzeugt wird; oder
b) Reaktorteil (11) für eine photokatalytische Wasserstofferzeugung ist, der mit Photokathode (9) über eine ionendurchlässige Membran (3) mit Reaktorteil (1) verbunden ist; oder
c) eine Photovoltaikzelle (10) ist, wobei Reaktorteil (1) über eine ionendurchlässige Membran (3) mit Reaktorteil (2) verbunden ist, in dem an der zur Photoanode (5) zugehörigen Kathode (6) Wasserstoff erzeugt wird,
**dadurch gekennzeichnet, dass** die Photoanode (5) einen Winkel α im Bereich von mehr als 0° und weniger als 90° zum einfallenden polychromatischen Licht aufweist und der weitere Reaktorteil (4, 10, 11) so angeordnet ist, dass er das von der Photoanode (5) reflektierte Licht aufnimmt.

2. Verfahren nach Anspruch 1, wobei TiO₂ als Material von Photoanode (5) verwendet wird.

3. Verfahren nach Anspruch 1 oder 2, wobei die ionendurchlässige Membran (3) aus Nafion^{(R)} besteht.

4. Verfahren nach Anspruch 1, wobei im Fall a) im weiteren Reaktor (4) der an der Photoanode (5) generierte Sauerstoff zur photokatalytischen Umsetzung genutzt wird.

5. Verfahren nach Anspruch 4, wobei der mit Sauerstoff photokatalytisch umzusetzende Stoff α-Terpinen ist und als Sensibilisator Bengalrosa verwendet wird.

6. Verfahren nach Anspruch 1, wobei im Fall b) im weiteren Reaktor 11 ein Photosensibilisator vorliegt.

7. Verfahren nach Anspruch 1, wobei im Fall c) der im Reaktorteil (10) erzeugte elektrische Strom Photoanode (5) und Kathode (6) zur Wasserzersetzung zugeführt wird.

8. Verfahren nach einem der vorangehenden Ansprüche, wobei Winkel α ≤ 45°, insbesondere etwa 45° beträgt.

9. Verfahren nach einem der vorangehenden Ansprüche, wobei im Falle, dass der Winkel α 90° beträgt, vor der Reaktorscheibe (7) ein dichroitischer oder dielektrischer Spiegel in einem Winkel a' angebracht ist, der kurzwelliges Licht zur Photoanode (5) durchlässt und langwelliges Licht auf den weiteren Reaktorteil (4, 10, 11) reflektiert.
